(19) Europäisches Patentamt / European Patent Office / Office européen des brevets

(11) **EP 2 494 517 B1**

(12) **FASCICULE DE BREVET EUROPEEN**

(45) Date de publication et mention de la délivrance du brevet:
**09.01.2019 Bulletin 2019/02**

(21) Numéro de dépôt: **10778594.1**

(22) Date de dépôt: **26.10.2010**

(51) Int Cl.:
*G06T 3/00* *(2006.01)*     *G06T 15/10* *(2011.01)*
*G06K 9/00* *(2006.01)*     *G06K 9/36* *(2006.01)*

(86) Numéro de dépôt international:
**PCT/EP2010/066190**

(87) Numéro de publication internationale:
**WO 2011/051297 (05.05.2011 Gazette 2011/18)**

(54) **PROCÉDÉ ET DISPOSITIF POUR OBTENIR UNE IMAGE D'UN DOCUMENT DÉFROISSÉ À PARTIR D'UNE IMAGE DE CE DOCUMENT LORSQU'IL EST FROISSÉ**

VERFAHREN UND VORRICHTUNG ZUR ERHALTUNG EINES BILDES EINES ZERKNITTERTEN DOKUMENTS AUS EINEM BILD DIESES DOKUMENTS IN ZERKNITTERTEM ZUSTAND

METHOD AND DEVICE FOR OBTAINING AN IMAGE OF A CRUMPLED DOCUMENT FROM AN IMAGE OF SAID DOCUMENT WHEN SAME IS CRUMPLED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2009 FR 0957674**

(43) Date de publication de la demande:
**05.09.2012 Bulletin 2012/36**

(73) Titulaire: **MORPHO**
**92130 Issy-Les-Moulineaux (FR)**

(72) Inventeurs:
• DOUBLET, Julien
  F-75015 Paris (FR)
• VERILHAC, Michaël
  F-75015 Paris (FR)
• REVELIN, Stéphane
  F-75015 Paris (FR)
• PICARD, Sylvaine
  F-75015 Paris (FR)

(74) Mandataire: **Cabinet Le Guen Maillet**
**3, impasse de la Vigie**
**CS 71840**
**35418 Saint-Malo Cedex (FR)**

(56) Documents cités:
**EP-A1- 1 067 362     US-A1- 2005 175 255**

• **BROWN M S ET AL: "Image Restoration of Arbitrarily Warped Documents", IEEE TRANSACTIONS ON PATTERN ANALYSIS AND MACHINE INTELLIGENCE, IEEE SERVICE CENTER, LOS ALAMITOS, CA, US LNKD-DOI:10.1109/TPAMI.2004.87, vol. 26, no. 10, 1 octobre 2004 (2004-10-01), pages 1295-1306, XP011116533, ISSN: 0162-8828**
• **DESBRUN M., MEYER M., ALLIEZ P.: "Intrinsic Parametrizations of Surface Meshes", EUROGRAPHICS 2002, vol. 21, no. 3, 2002, pages 209-218, XP002622049,**
• **TAN C. L., ZHANG L., ZHANG Z., XIA T.: "Restoring Warped Document Images through 3D Shape Modeling", IEEE TRANSACTIONS ON PATTERN ANALYSIS AND MACHINE INTELLIGENCE, vol. 28, no. 2, février 2006 (2006-02), pages 195-207, XP002585098,**

**Description**

La présente invention concerne un procédé et dispositif pour obtenir une image d'un document défroissé à partir d'une image de ce document lorsqu'il est froissé.

La présente invention peut être mise en oeuvre dans toute application qui requiert la comparaison d'une information portée par un document avec un modèle numérique de cette information définie en considérant que le document soit parfaitement plat.

Par exemple, la présente invention peut être associée à un dispositif de validation automatique de tickets de loterie (document). En effet, dans ce type d'application, le ticket comporte une grille dont certaines cases ont été cochées par un joueur. Le ticket est alors posé sur un support du dispositif de validation, ce dispositif prend alors une image du ticket et compare l'information portée par cette image avec un modèle numérique de la grille gagnante.

Lorsque le document est froissé, il convient donc de le défroisser manuellement (de le déplier) afin qu'il soit le plus à plat possible sur le support et ce afin d'éviter toute distorsion de l'image acquise par le dispositif qui pourrait fausser le résultat de la comparaison entre le ticket et la grille numérique gagnante.

Dans ce type de dispositifs, même si le ticket n'est pas froissé, l'image acquise est toutefois généralement distordue à cause de la position relative du support sur lequel est posé le document et la caméra utilisée pour acquérir l'image de ce document.

Il est connu des procédés pour obtenir une image d'un document défroissé à partir d'une image de ce document lorsqu'il est froissé. Le principe de ces procédés consiste à projeter sur le document le motif d'une mire (des marqueurs), à déduire un modèle géométrique tridimensionnel de la surface du document froissé par extraction de ces marqueurs sur l'image acquise et calcul, entre autres, de la distance entre chaque marqueur de l'image acquise et la caméra alors calibrée à partir de cette mire, et à appliquer des homographies tridimensionnelles soit locales soit globales pour obtenir l'image du document défroissé à partir de ce modèle géométrique tridimensionnel de la surface du document froissé.

Dans ces approches, le modèle géométrique tridimensionnel est défini à partir d'un ou deux plans. Dans le cas d'un plan, une homographie globale est alors effectuée tandis que dans le cas de deux plans, deux homographies locales sont effectuées suivant chacun des deux plans.

Concernant l'obtention d'un modèle géométrique tridimensionnel de la surface du document froissé à partir d'une image acquise, plusieurs approches sont classiquement utilisées.

L'une d'entre elles consiste à projeter sur un plan les marqueurs extraits de l'image selon un angle déterminé et à trianguler les points du modèle géométrique tridimensionnel ainsi obtenus. La surface du document froissé est alors modélisée par un ensemble de triangles tridimensionnels reliant ces points.

Une autre approche consiste à définir les marqueurs de la mire par des segments de droite, à projeter les segments de droite de la mire extraits de l'image sur un plan selon un angle prédéterminé, à mesurer l'angle « réel » de projection et à déformer la projection des segments de droite pour que leur projection sur le plan soit réalisée selon cet angle mesuré.

Une autre approche consiste à utiliser un ensemble de caméras calibrées. Cette approche est similaire à l'approche par projection de marqueurs au détail près que le projecteur est vu comme une caméra à l'envers. Au lieu qu'un point de l'image soit acquis par le capteur, il est projeté.

Les procédés actuels pour obtenir une image d'un document défroissé à partir d'une image de ce document lorsqu'il est froissé sont des procédés génériques qui sont coûteux en temps de calcul et qui ne permettent d'obtenir que des images qui présentent des distorsions au niveau des parties froissées du document et des aberrations importantes sur leurs bords. Il existe des exemples de réalisation d'un tel procédé, il est fait référence entre autres au document BROWN et al., Image Restoration of Arbitrary Warped Documents, 2004 et: DESBRUN et al., Intrinsic Parametrization of Surface Meshes, 2002.

L'inventeur a observé que lorsque le document présente de fortes fréquences spatiales, c'est-à-dire que l'information portée par ce document suit une structure géométrique qui est connue *a priori,* ces procédés pouvaient être optimisés pour remédier aux inconvénients ci-dessus.

A cet effet, la présente invention concerne un procédé pour obtenir une image d'un document défroissé à partir d'une image de ce document lorsqu'il est froissé, le procédé comportant une étape de détermination d'un modèle géométrique tridimensionnel de la surface du document froissé par triangulation de points tridimensionnels définis à partir du motif d'une mire extrait de l'image de ce document lorsqu'il est froissé. Le procédé est caractérisé en ce qu'il comporte une étape de détermination d'une projection du modèle géométrique tridimensionnel sur un plan, dit d'acquisition, par minimisation d'erreur de cette projection sous contraintes de conservation de caractéristiques géométriques définies au voisinage des points tridimensionnels, et en ce qu'il comporte une étape de plaquage des textures associées au modèle géométrique tridimensionnel sur la projection de ce modèle ainsi déterminée.

L'utilisation d'une telle détermination d'une projection du modèle géométrique tridimensionnel sur un plan d'acquisition, en l'occurrence le plan du support sur lequel le document froissé est posé, permet de diminuer le temps de calcul de l'image du document défroissé et d'obtenir une image qui ne présente plus de distorsions au niveau des parties froissées du document ni d'aberrations sur les bords de cette image.

Selon d'autres aspects, la présente invention concerne un dispositif qui met en oeuvre ce procédé ainsi que des motifs de mire qui permettent d'améliorer la qualité de l'image résultante du procédé et/ou de diminuer le coût de calcul de cette image.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1 représente un dispositif pour obtenir une image d'un document défroissé à partir d'une image de ce document lorsqu'il est froissé,

La Fig. 2 représente un diagramme des étapes du procédé pour obtenir une image d'un document défroissé à partir d'une image de ce document lorsqu'il est froissé,

La Fig. 3 représente un exemple de motif de la mire,

La Fig. 4 représente un autre exemple de motif de la mire,

La Fig. 5 représente une illustration de l'indexation de segments de droite extraits selon un mode de réalisation,

La Fig. 6 représente une illustration de la définition des points tridimensionnels du modèle géométrique de la surface du document,

La Fig. 7 représente un exemple de maillage triangulaire pour un motif donné,

La Fig. 8 représente un exemple de polygone qui délimite la surface projetée du document défroissé,

La Fig. 9 représente un exemple de voisinage d'un point tridimensionnel,

La Fig. 10 représente un exemple de remplacement d'un point par son barycentre,

La Fig. 11 représente une illustration du calcul des coefficients de pondération associés aux points tridimensionnels, et

La Fig. 12 représente un exemple de remplacement de points du polygone qui délimitent le contour de la surface projetée du document froissé par un autre point.

Le dispositif D comporte un support d'acquisition S dont une de ses surfaces, appelé plan d'acquisition, est prévue pour qu'un document DO froissé soit posé dessus.

Le dispositif D comporte également une caméra numérique C et un dispositif de projection DP d'une mire M. Cette mire M comporte un motif structuré. Cette mire M est utilisée, préalablement à la mise en oeuvre de la présente invention, pour calibrer la caméra C.

Le document DO froissé est placé sur le support d'acquisition S. Le dispositif DP projette alors la mire M et la caméra C prend une image I du document DO sur laquelle apparaît en surimposition le motif de la mire M.

La caméra C et le support d'acquisition S sont positionnés l'un par rapport à l'autre pour que la projection de la mire M soit faite selon un axe différent de celui de la caméra.

Selon un mode de réalisation, le dispositif DP est positionné pour que la mire M soit directement projetée sur le document DO lorsque celui-ci est posé sur la surface d'acquisition S.

Selon un autre mode de réalisation, le dispositif DP est positionné pour que la mire M soit projetée à travers le document DO. Pour cela, par exemple, le dispositif DP projette la mire M sur la surface opposée à la surface du support d'acquisition S sur laquelle est posé le document DO. Ce mode de réalisation peut être utilisé lorsque le document DO et le support S présentent une opacité suffisamment faible pour que la mire soit visible sur l'image I.

La projection de la mire M est réalisée par une lumière qui appartient à une partie du spectre lumineux qui peut être soit une partie visible de ce spectre soit la partie infrarouge. Quoi qu'il en soit, la partie du spectre lumineux utilisée pour la projection de la mire M est choisie pour que le motif de cette mire soit visible par surimposition sur l'image I acquise du document DO.

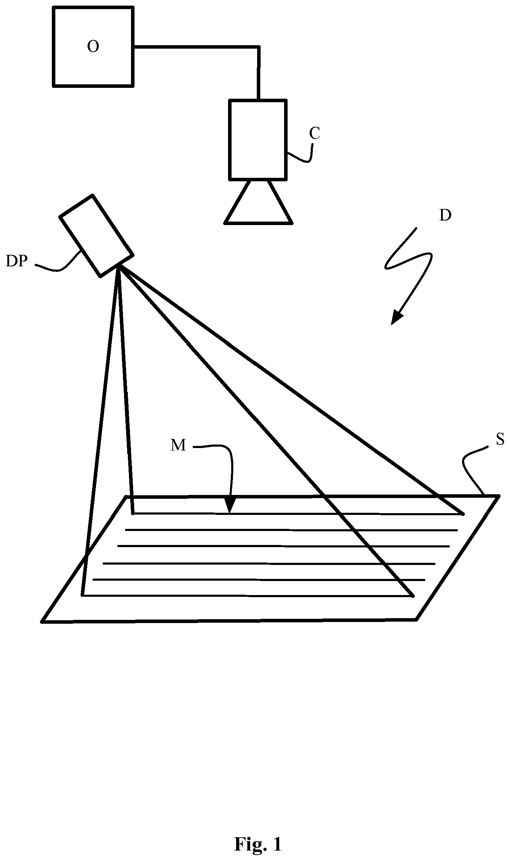

Le dispositif D comporte également des moyens O, tels qu'un ordinateur, pour mettre en oeuvre un procédé pour obtenir une image F du document DO défroissé à partir de l'image I. Selon l'exemple de la Fig. 1, les moyens O sont directement reliés à la caméra C. Toutefois, la présente invention n'est pas limitée à ce que les moyens O soient directement reliés à la caméra C mais peuvent également obtenir l'image I de la caméra C par d'autres moyens tels que des moyens radiofréquences ou à partir d'une mémoire.

De manière générale, le procédé, selon l'invention, comporte une étape 100 de détermination d'un modèle géométrique tridimensionnel M3D de la surface du document froissé DO par triangulation de points tridimensionnels $u_i$ définis à partir du motif d'une mire M extrait de l'image acquise I, une étape 200 de détermination d'une projection M2D du modèle géométrique tridimensionnel M3D sur un plan d'acquisition par minimisation d'erreur ERR de cette projection sous contraintes de conservation de caractéristiques géométriques définies au voisinage des points tridimensionnels $u_i$, et une étape 300 de plaquage des textures associées au modèle géométrique tridimensionnel M3D sur la projection M2D ainsi déterminée.

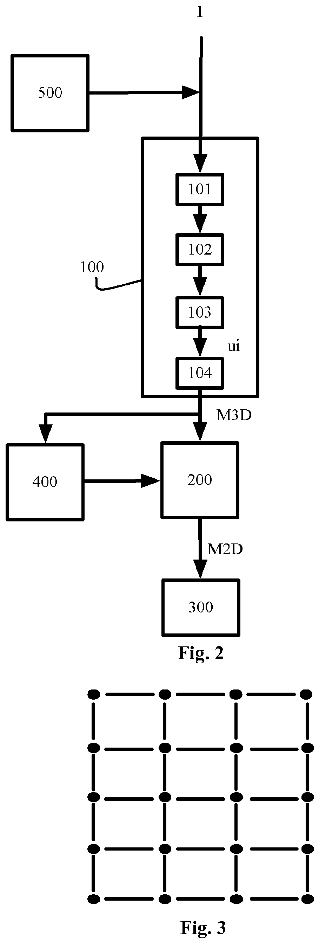

La Fig. 2 représente un diagramme des étapes du procédé.

Au cours de l'étape 100, le motif de la mire M qui apparaît en surimposition sur l'image I est tout d'abord extrait de cette image.

De manière générale, le motif de la mire M est formé de points et/ou d'au moins un ensemble de segments de droite parallèles entre eux.

On entend par là que le motif peut n'être formé que d'un seul ensemble de segments de droite ou de plusieurs ensembles. Par exemple, le motif peut être formé de deux ensembles perpendiculaires de manière à former une grille. Mais le motif peut également être formé par des points et au moins un ensemble de segments de droite qui définissent les relations de voisinage entre ces points, tel que illustré à la Fig. 3. Ainsi, la définition du voisinage des points de l'image I, qui sera utilisée par la suite, est facilitée par le fait que les segments de droite sont également extraits de l'image I et désignent alors directement le voisinage de chaque point extrait.

Le choix de la méthode pour extraire le motif de la mire de l'image I (sous-étape 101) dépend du choix du motif de la mire M.

Lorsque le motif comporte un (au moins un) ensemble de segments de droite parallèles entre eux tel que représenté à la Fig. 1, l'extraction des segments de droite de l'image I consiste à filtrer fréquentiellement l'image I et à rechercher ensuite des maximas locaux de cette image I filtrée. Ce filtrage est effectué, de préférence, à l'aide soit d'un filtre sinusoïdal soit d'une projection dans l'espace de Fourrier.

Lorsque le motif comporte des points et au moins un ensemble de segments de droite qui définissent les relations de voisinage entre ces points, l'extraction du motif est basée sur une recherche de sphéricité dans l'image I pour l'extraction des points et sur un calcul d'énergie dans un plan de couleur de l'image pour l'extraction des segments de droite. La sphéricité peut être définie par la transformée de Hough et les segments de droite sont ensuite extraits selon un calcul d'énergie le long des droites passant par le centre des cercles résultant de cette transformée.

Par exemple, si le motif est projeté par une lumière à forte composante rouge, la recherche de sphéricité des points ainsi que le calcul d'énergie se limiteront au plan de couleur rouge de l'image I.

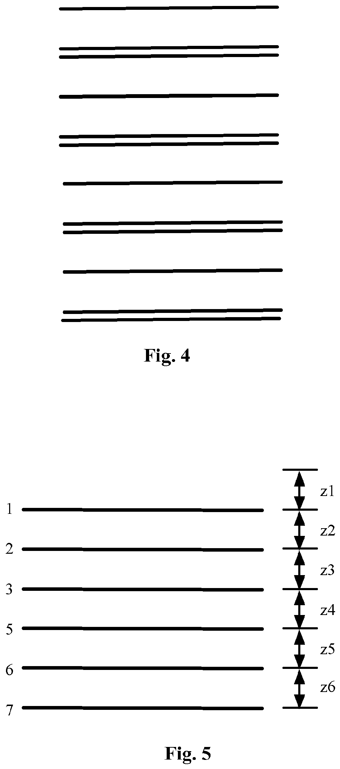

Dans le but d'augmenter la robustesse de l'indexation des segments de droite du motif, c'est-à-dire la probabilité que les éléments extraits font bien partie du motif de la mire M, le motif est, selon un mode de réalisation, une alternance de segments de droite simples et doubles tel qu'illustré à la Fig. 4.

En variante, les épaisseurs de ces segments de droite sont différentes et/ou les distances qui les séparent sont variables.

Par exemple, le motif peut représenter un code barre ce qui permet à chaque segment de droite extrait du motif d'être identifié par son épaisseur et sa distance avec les segments de droite voisins. Ainsi, chaque segment de droite ne peut être confondu avec un autre de ce motif.

Une fois le motif extrait de l'image I, les segments de droite extraits de l'image I sont indexés (sous-étape 102) afin de pouvoir les mettre en correspondance avec ceux d'un motif théorique. Ce motif théorique est celui obtenu par projection de la mire M sur la surface d'acquisition sur laquelle n'est positionné aucun document ou sur laquelle est positionné un document non froissé ne comportant pas de déformation. La projection de la mire ne permet pas d'identifier des informations particulières du document mais permet uniquement de modéliser le document en trois dimensions. C'est un des intérêts de la méthode qui permet de défroisser des documents sans aucune connaissance sur leur contenu ou les motifs qu'ils pourraient comporter.

L'indexation des segments de droite extraits consiste selon un mode de réalisation, à déterminer le déplacement de ces segments de droite par rapport à des segments de droite dits de référence. Les segments de droite sont alors indexés suivant le segment de droite de référence le plus proche suivant la position du projecteur.

La Fig. 5 représente une illustration de l'indexation de segments de droite extraits selon ce mode de réalisation. Chaque segment de droite extrait est indexé suivant une zone Zi (i=1 à 6 selon l'exemple). Les zones Zi sont définies par l'espace entre deux segments de droite de référence i-1 et i.

Pour augmenter la robustesse de l'indexation de ces segments de droite, l'indexation est basée sur la fréquence spatiale du motif et, selon un mode de réalisation, l'indexation est basée sur une approche de Fourrier. Dans cette dernière approche, les segments de droite du motif sont indexés par démodulation du signal, c'est-à-dire que l'image I est projetée dans l'espace fréquentiel pour définir des zones Zi, puis ces zones Zi subissent une projection inverse et sont alors indexées par décalage de phases.

Une fois que les segments de droite extraits sont indexés, les points tridimensionnels $u_i$ sont définis à partir du motif extrait.

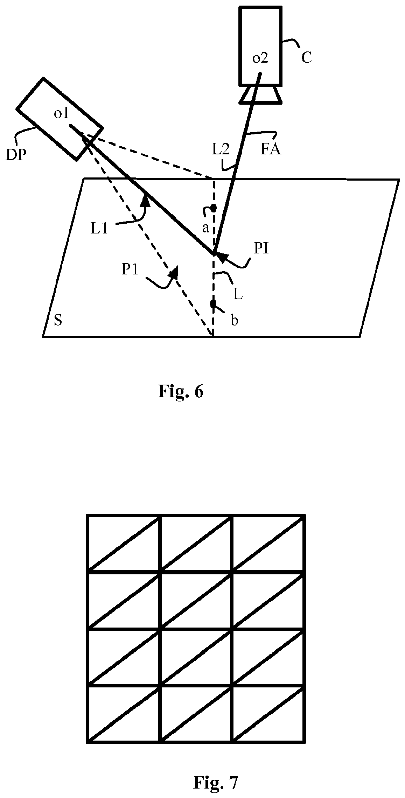

Selon un mode de réalisation, au cours de la sous-étape 103, les points $u_i$ sont définis selon une approche illustrée à la Fig. 6 qui consiste à déterminer ces points $u_i$ par triangulation de points si le motif est formé de points et par triangulation de segments de droite si le motif est formé de segments de droite et par triangulation des points et des segments de droite si le motif est formé de points et de segments de droite.

Pour déterminer les points $u_i$ par triangulation des segments de droite indexés, la caméra C est vue comme un ensemble de faisceaux qui se propagent selon des segments de droite L2 qui coupent le plan d'acquisition, en l'occurrence le plan du support S sur lequel le document DO est posé, en des points d'intersection PI. Par ailleurs, la projection lumineuse de chaque segment de droite du motif de la mire sur le plan d'acquisition forme un segment de droite L qui induit un plan lumineux P1 qui se définit par le centre optique o1 du dispositif de projection DP, qui est le point d'origine de l'émission de la lumière de projection, et par deux points a et b du segment de droite L. Le plan P1 a pour équation al *x+b1*y+c1*z+d1=0 dans lequel les paramètres (al,bl,cl) sont définis par les coordonnées du centre optique o1 et les coordonnées des points a et b.

Les points $u_i$ de coordonnées (x,y,z) sont alors obtenus par résolution du système d'équations suivant:

$$\begin{cases} a1*x + b1*y + c1*z + d1 = 0 \\ a2*x + b2*y + c2*z + d2 = 0 \\ a3*x + b3*y + c3*z + d3 = 0 \end{cases}$$

dans lequel a2*x+b2*y+c2*z+d2=0 et a3*x+b3*y+c3*z+d3=0 sont les équations cartésiennes de deux plans qui définissent le segment de droite L2.

De même, la projection lumineuse d'un point du motif de la mire M sur le plan d'acquisition est un point d'intersection PI (ou un point proche s'il n'y a pas de point d'intersection) entre l'objet à modéliser et le faisceau lumineux. Un segment de droite L1 est ainsi défini par le centre optique o1 et le point p1 passant par le centre optique et le faisceau lumineux.

Trianguler un point du motif de la mire M revient alors à déterminer le point d'intersection PI entre la droite L1 et la droite L2 qui est défini par le centre optique o2 de la caméra et le point p2 passant par le centre optique o2 et le faisceau lumineux.

Les points $u_i$ de coordonnées (x,y,z) sont alors déterminés de la manière suivante :

$$u_i = ( r1 + r2 ) / 2$$

avec

$$O = o1 - o2$$

$$d2 = p2 - o2$$

$$d1 = p1 - o1$$

$$C = \{ d2.y*d1.z - d2.z*d1.y , d2.z*d1.x - d2.x*d1.z , d2.x*d1.y - d2.y*d1.x \}$$

$$N = \|C\|^2$$

$$r2 = o2 + d2*DET( O , d1 , C ) / N$$

$$r1 = o1 + d1*DET( O , d2 , C ) / N$$

dans lesquelles DET est la fonction qui calcule le déterminant d'une matrice 3*3.

Une fois les points $u_i$ définis, le modèle tridimensionnel M3D est obtenu par triangulation de ces points de manière à obtenir une représentation maillée de la surface du document DO (sous-étape 104).

Selon un mode de réalisation, la construction de ce maillage est réalisée à partir de la structure du motif. A titre d'illustration, un maillage triangulaire pour le motif de la Fig. 3 est représenté à la Fig. 7.

Selon un autre mode de réalisation, la construction de ce maillage est réalisée par une triangulation de Delaunay.

Au cours de l'étape 200, les points $u_i$ sont projetés sur le plan d'acquisition par minimisation d'une erreur ERR définie à partir des points $u_i$ et de leurs projetés $p_i$ sur le plan P sous contraintes de conservation de caractéristiques géométriques définies sur un voisinage des points $u_i$.

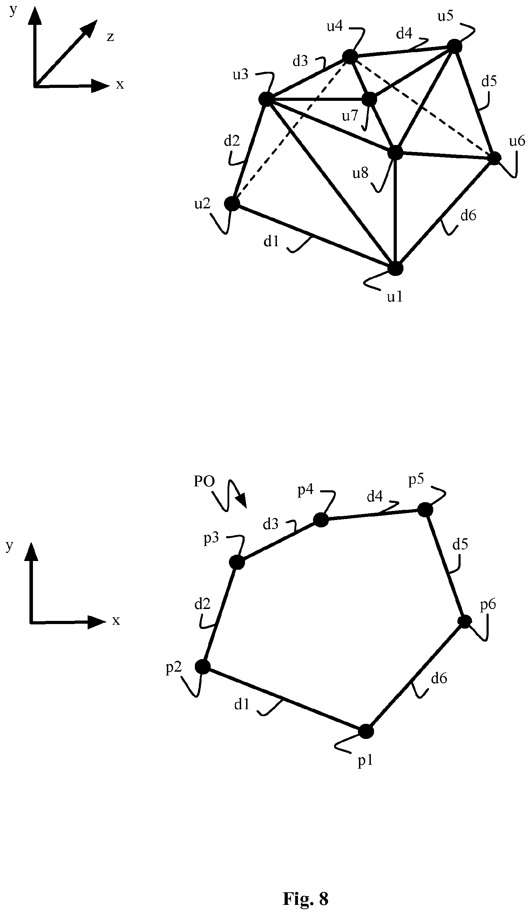

Selon ce mode de réalisation, l'erreur ERR est minimisée sous contraintes de conservation des distances entre les points $u_i$, représentés ici par des points en partie haute de la Fig. 8, et des angles entre les différentes arêtes, ici représentées par des traits continus et pointillés.

Pour cela, dans un premier temps, la surface projetée du modèle M3D est délimitée par définition d'un polygone PO qui définit le contour de la surface projetée du document DO défroissé.

Pour cela, les points du modèle géométrique M3D sont identifiés parmi l'ensemble des points tridimensionnels comme étant des points du polygone PO lorsque ces points définissent des arêtes qui n'appartiennent qu'à un seul triangle du modèle géométrique M3D. La partie basse de la Fig. 8 donne un exemple de polygone formé à partir des points p1 à p6 issus de l'exemple du modèle M3D de la partie haute de la Fig. 8.

Les distances entre deux points $u_i$ consécutifs du polygone PO, c'est-à-dire la longueur des arêtes qui les séparent, ainsi que les angles entre ces arêtes sont alors calculés. Selon l'exemple de la Fig. 8, les distances $d_1$ à $d_6$ et les angles entre ces arêtes sont calculés.

Dans un second temps, les points $u_i$ du modèle M3D, ici les points $u_7$ et $u_8$, qui n'appartiennent pas aux bords, c'est-à-dire ceux qui sont à l'intérieur au sens strict du polygone fermé PO, sont considérés comme étant des points internes qui sont exprimés mathématiquement par une combinaison linéaire pondérée de leurs voisins. Plus précisément, un point interne $u_i$ est exprimé par

$$u_i = \sum_{v=1}^{N_i} \lambda_v u_v \qquad (1)$$

avec $N_i$ un entier égal au nombre de voisins du point $u_i$, $\lambda_v$ un coefficient de pondération et $u_v$ un des $N_i$ point voisins du point $u_i$.

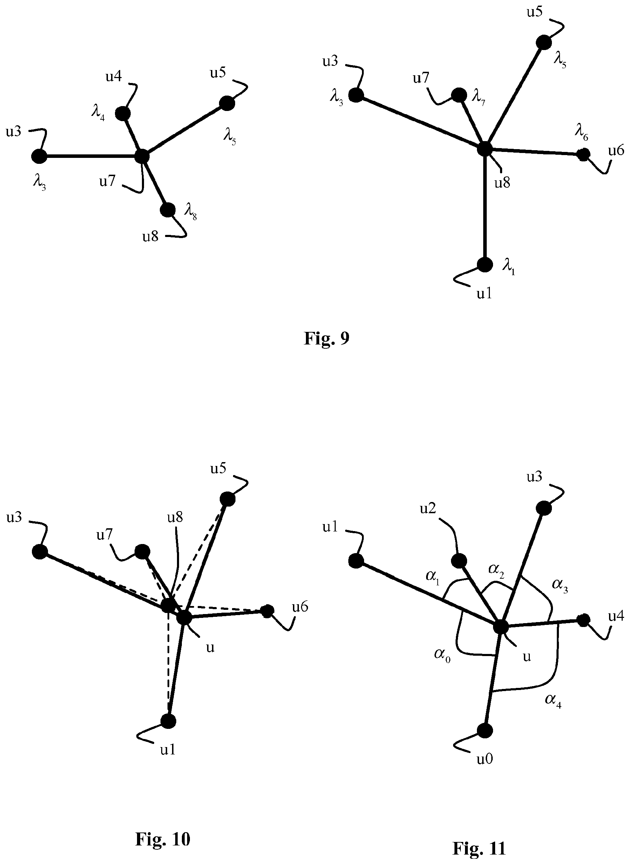

La Fig. 9 représente les points $u_7$ et $u_8$ ainsi que leurs points voisins, en l'occurrence les points $u_3$, $u_4$, $u_5$ et $u_8$ pour le point $u_7$ et les points $u_1$, $u_3$, $u_5$, $u_6$ et $u_7$ pour le point $u_8$.

Selon un mode de réalisation, les coefficients de pondération $\lambda_v$ relatifs au $N_i$ points voisins d'un point $u_i$ sont égaux à $1/N_i$.

Afin de préserver les contraintes géométriques du modèle M3D, selon un mode de réalisation, le point interne $u_i$ de l'équation (1) est remplacé par un point tridimensionnel $u$ défini comme étant le barycentre des points voisins $u_v$ de ce point interne $u_i$ tel que illustré à la Fig. 10 dans le cas du point interne $u_8$ et où les pointillés représentent le modèle M3D avant remplacement du point $u_8$ par le barycentre $u$.

Chaque coefficient de pondération $\lambda_v$ est alors égal à

$$\lambda_v = \frac{w_v}{\sum_{n=1}^{N_i} w_n} \qquad \text{avec} \quad w_v = \frac{\tan(\alpha_{v-1}/2) + \tan(\alpha_v/2)}{\|u_v - u\|}$$

et dans lesquelles $\alpha_v$ est l'angle formé par les deux arêtes $a_v$ et $a_{v+1}$ qui relient le barycentre $u$ à deux sommets voisins consécutifs $u_v$ et $u_{v+1}$ et $\alpha_{v-1}$ est l'angle formé par les deux arêtes $a_{v-1}$ et $a_v$ qui relient le barycentre $u$ à deux sommets voisins consécutifs $u_{v-1}$ et $u_v$.

Ainsi, selon l'exemple de la Fig. 11, dans laquelle les sommets $u_1$, $u_3$, $u_5$, $u_6$ et $u_7$ ont respectivement été re-numérotés $u_0$, $u_1$, $u_2$, $u_3$ et $u_4$, le coefficient $w_0$, qui est utilisé pour le calcul du coefficient $\lambda_1$ est donné par

$$w_0 = \frac{\tan(\alpha_4/2) + \tan(\alpha_0/2)}{\|u_0 - u\|}$$, le coefficient $w_1$, qui est utilisé pour le calcul du coefficient $\lambda_3$ est donné par

$$w_1 = \frac{\tan(\alpha_0/2) + \tan(\alpha_1/2)}{\|u_1 - u\|}$$, le coefficient $w_2$, qui est utilisé pour le calcul du coefficient $\lambda_7$ est donné par

$$w_2 = \frac{\tan(\alpha_1/2) + \tan(\alpha_2/2)}{\|u_2 - u\|}$$, le coefficient $w_3$, qui est utilisé pour le calcul du coefficient $\lambda_5$ est donné par

$$w_3 = \frac{\tan(\alpha_2 / 2) + \tan(\alpha_3 / 2)}{\|u_3 - u\|}$$ , et le coefficients $w_4$, qui est utilisé pour le calcul du coefficient $\lambda_6$ est donné par

$$w_4 = \frac{\tan(\alpha_3 / 2) + \tan(\alpha_4 / 2)}{\|u_4 - u\|} .$$

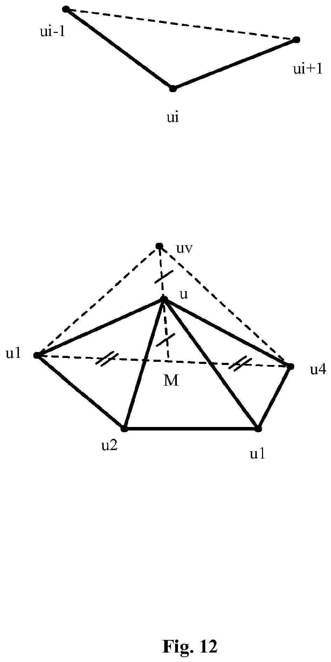

L'inventeur a observé que le choix des points du modèle M3D pour former le polygone PO ne permettait pas d'obtenir un polygone PO qui reproduise fidèlement le contour de la surface projetée du modèle M3D lorsque ce contour présente des concavités. Pour pallier cet inconvénient, lorsqu'une concavité est présente en point $u_i$ du polygone PO, ce point est considéré comme un point interne qui est alors traité comme expliqué ci-dessus et une nouvelle arête est formée entre les deux points $u_{i-1}$, $u_{i+1}$ du polygone PO qui sont voisins de ce point $u_i$ tel que illustré en partie haute de la Fig. 12 dans laquelle la nouvelle arête est représentée en pointillé.

Lorsqu'une convexité est présente en un point $u$ du polygone PO, un point virtuel $u_{N+1}$ est ajouté au polygone PO et ce point $u$ est considéré comme étant un point interne.

Selon un mode de réalisation, le point virtuel $u_{N+1}$ est défini par le point de symétrie centrale à ce point $u$ qui est porté par une droite reliant le point $u$ au milieu de l'arête qui relie deux points du polygone $u_{i-1}$, $u_{i+1}$ voisins du point $u$, tel que illustré en partie basse de la Fig. 12. Dans cet exemple, supposons que les points $u_1$ à $u_4$ et $u$ sont des points du polygone PO. Une convexité au point $u$ est présente. Un point virtuel $u_{N+1}$ est alors défini par le point de symétrie centrale à $u$ du milieu des deux points voisins à $u$, en l'occurrence $u_1$ et $u_4$.

En termes mathématiques, un point virtuel $u_{N+1}$ est défini par :

$$u_{N+1} = 2 * u - M \text{ et } M = (u_1 + u_N) / 2$$

c'est-à-dire que la relation suivante est vérifiée :

$$u = \sum_{i=1}^{N+1} \lambda_i u_i$$

Les coefficients de pondérations sont alors définis par :

$$\lambda_i = \frac{w_i}{\sum_{j=1}^{N+1} wj} \text{ avec } w_i = \frac{\tan(\alpha_{i-1} / 2) + \tan(\alpha_i / 2)}{\|u_i - u\|}$$

Dans un quatrième temps, le modèle M3D est projeté sur le plan d'acquisition P en minimisant l'erreur de projection ERR sous contraintes de conservation de caractéristiques géométriques définies au voisinage des points $u_i$.

Selon un mode de réalisation, l'erreur ERR est minimisée de manière itérative de manière à diminuer la divergence entre les combinaisons linéaires de l'équation (1), qui représentent les points internes du modèle 3D et les combinaisons linéaires des points de la projection M2D. Un algorithme de type LSQR (Linear and Sparse lest sQuaRes) est par exemple utilisé à cet effet mais toute autre méthode de résolution de systèmes peut convenir.

Enfin, les points projetés pi, obtenus à l'issue de la minimisation de l'erreur ERR sont triangulés de préférence selon la triangulation de Delaunay.

A l'issue de l'étape 200, la projection M2D est une représentation géométrique bidimensionnelle du document DO défroissé. Cette représentation regroupe un ensemble de triangles dont les sommets sont soit les projetés $p_i$ des points $u_i$, soit les projetés des points virtuels.

Au cours de l'étape 300, l'image F du document défroissé est obtenue en plaquant la texture de chaque triangle du modèle M3D sur le triangle correspondant de la représentation M2D par homographie de plan, c'est-à-dire par application d'une transformation à chacun des points. La transformation est une matrice donnée par:

$$\begin{pmatrix} x1 & x2 & x3 \\ y1 & y2 & y3 \\ z1 & z2 & z3 \end{pmatrix}^{-1} * \begin{pmatrix} x4 & x5 & x6 \\ y4 & y5 & y6 \\ z4 & z5 & z6 \end{pmatrix}$$

dans laquelle X1 de coordonnées (x1,y1,z1), X2 de coordonnées (x2,y2,z2) et X3 de coordonnées (x3,y3,z3) sont trois points qui définissent le plan avant transformation et X4 de coordonnées (x4,y4,z4), X5 de coordonnées (x5,y5,z5) et X6 de coordonnées (x6,y6,z6) sont trois points qui définissent le plan après transformation.

L'image F est donc une représentation numérique visuelle du document DO défroissé.

Selon un mode de réalisation du procédé, l'étape 200 du procédé est précédée d'une étape 400 de réduction de la complexité du modèle géométrique tridimensionnel M3D, au cours de laquelle le modèle géométrique M3D issu de l'étape 100, qui, rappelons-le est une représentation tridimensionnelle de la surface du document froissé DO définie par un ensemble de triangles dont les sommets sont les points $u_i$, est remaillé afin de diminuer le nombre de triangles et de points de ce modèle.

A cet effet, la topologie de la modélisation M3D est définie pour chaque point $u_i$ par l'ensemble des angles formés par les arêtes qui relient ce point $u_i$ et chacun de ses voisins. Au cours de l'étape 400, si la topologie autour d'un point $u_i$ n'est pas plane, c'est-à-dire que les angles sont trop importants, la topologie de ce point $u_i$ reste inchangée. Dans le cas contraire, le point $u_i$ est supprimé du modèle tridimensionnel M3D et les points voisins de ce point $u_i$ sont alors à nouveau triangulés pour reformer localement un maillage.

Le modèle tridimensionnel M3D obtenu à l'issu de l'étape 100 est une représentation géométrique mono-résolution de la surface du document froissé DO.

Il est avantageux d'obtenir des modèles M3D à différentes résolutions de manière à ce que la minimisation de l'erreur ERR réalisée au cours de l'étape 200 pour l'un de ces modèles soit appliquée à des résolutions de plus en plus fines suivant des contraintes de temps de calcul ou de précision du résultat obtenu.

A cet effet, le procédé comporte une étape 500 d'approximation de la surface du document froissé DO par un ensemble d'ondelettes dans l'espace et, de manière optionnelle, les éléments de faibles intensités après définition des différentes représentations par ces ondelettes sont supprimés pour limiter la complexité du modèle multi-résolution M3D ainsi obtenu.

## Revendications

1. Procédé pour obtenir une image d'un document défroissé à partir d'une image (I) de ce document lorsqu'il est froissé (DO), ledit procédé comportant une étape (100) de détermination d'un modèle géométrique tridimensionnel (M3D) de la surface du document froissé (DO) par triangulation de points tridimensionnels ($u_i$) définis à partir du motif d'une mire (M) extrait de l'image (I) de ce document lorsqu'il est froissé, une étape (200) de détermination d'une projection (M2D) du modèle géométrique tridimensionnel (M3D) sur un plan dit d'acquisition par minimisation d'erreur (ERR) de cette projection sous contraintes de conservation des distances entre les points tridimensionnels (ui) du modèle géométrique tridimentionnelle, **caractérisé en ce que** l'erreur (ERR) de projection du modèle géométrique tridimensionnel (M3D) est également minimisée sous contraintes de conservation des angles entre les différentes arêtes qui relient ces points tridimensionnels.

2. Procédé selon la revendication 1, dans lequel le motif comportant au moins un ensemble de segments de droite parallèles en entre eux, au cours de l'étape (100) de détermination d'un modèle géométrique tridimensionnel (M3D) de la surface du document froissé (DO), les segments de droite du motif (sous-étape 101) sont extraits de l'image (I) par filtrage fréquentiel de l'image acquise (I) et recherche des maximas locaux de cette image (I) filtrée, les segments de droite extraits sont alors indexés par rapport à des segments de droite de référence (sous-étape 102), et les points tridimensionnels ($u_i$) sont alors déterminés (sous-étape 103) par triangulation des segments de droite ainsi indexés.

3. Procédé selon la revendication 1, dans lequel le motif de la mire (M) comportant un ensemble de points et des segments de droite qui définissent les relations de voisinage entre ces points, les points sont extraits de l'image (I) par recherche de sphéricité dans l'image acquise (I) et les segments de droite sont extraits de l'image (I) par calcul d'énergie dans un plan de couleur de l'image (I), les segments de droite extraits sont alors indexés par rapport à des segments de droite de référence (sous-étape 102), et les points tridimensionnels ($u_i$) sont alors déterminés (sous-étape 103) par triangulation des points et des segments de droite ainsi extraits.

4. Procédé selon l'une des revendications 1 à 3, dans lequel au cours de l'étape (200) de détermination de la projection (M2D) du modèle géométrique tridimensionnel (M3D) sur le plan d'acquisition,

   - la surface projetée du modèle géométrique tridimensionnel (M3Dà est délimitée par définition d'un polygone (PO) qui définit le contour de la surface projetée du document (DO) défroissé, les points du modèle géométrique tridimensionnel (M3D) étant identifiés parmi l'ensemble des points tridimensionnels comme étant des points

EP 2 494 517 B1

du polygone (PO) lorsque ces points définissent des arêtes qui n'appartiennent qu'à un seul triangle du modèle géométrique tridimensionnel (M3D), les autres points du modèle géométrique étant alors considérés comme étant des points dits internes au polygone fermé (PO) et définis par une combinaison linéaire pondérée de leurs voisins, et

- à calculer les longueurs des arêtes qui relient deux points tridimensionnels ($u_i$) consécutifs du polygone (PO) ainsi que les angles entre ces arêtes.

**5.** Procédé selon la revendication 4, dans lequel lorsqu'une concavité est présente en un point du polygone (PO), ce point est considéré comme un point interne, et lorsqu'une convexité est présente en un point du polygone (*u*), un point virtuel ($u_{N+1}$) est ajouté au polygone et le point du polygone (u) est alors considéré comme étant un point interne.

**6.** Procédé selon la revendication 5, dans lequel un point virtuel ($u_{N+1}$) est défini par le point de symétrie centrale au point du polygone ($u_{N+1}$) qui est porté par une droite reliant le point du polygone (*u*) au milieu de l'arête qui relie deux points voisins ($u_{i-1}$, $u_{i+1}$) du point (*u*) du polygone.

**7.** Procédé selon la revendication 5 ou 6, dans lequel chaque point tridimensionnel qui est considéré comme un point interne est remplacé par le barycentre de ses points voisins.

**8.** Procédé selon l'une des revendications, dans lequel l'étape (200) de détermination d'une projection (M2D) du modèle géométrique tridimensionnel (M3D) est précédée d'une étape (400) de réduction de la complexité du modèle géométrique tridimensionnel (M3D), au cours de laquelle si la topologie autour d'un point tridimensionnel ($u_i$) du modèle géométrique (M3D) n'est pas plane, la topologie de ce point reste inchangée, et dans le cas contraire, le point est supprimé du modèle tridimensionnel et les points voisins de ce point sont alors à nouveau triangulés.

**9.** Procédé selon l'une des revendications précédentes, qui comporte une étape (500) d'approximation de la surface du document froissé (DO) par un ensemble d'ondelettes dans l'espace, un modèle géométrique tridimensionnel multi-résolution est alors obtenu et les étapes du procédé conformes à l'une des revendications 1 à 9 sont alors exécutées pour déterminer un modèle géométrique tridimensionnel à aux moins l'une des résolutions définies par cet ensemble d'ondelettes.

**10.** Motif d'une mire (M) destiné à être projeté sur un document froissé dont une image (I) est acquise par une caméra, et formé d'au moins un ensemble de segments de droite parallèles entre eux, **caractérisé en ce que** le motif est également formé de points, lesdits segments de droite définissant alors les relations de voisinage entre ces points

**11.** Motif d'une mire selon la revendication 10, dans lequel le motif est formé d'une alternance de segments de droite simples et doubles et/ou les épaisseurs de ces segments de droite sont différentes et/ou les distances qui les séparent sont variables.

**12.** Dispositif pour obtenir une image d'un document défroissé à partir d'une image (I) de ce document lorsqu'il est froissé (DO), ledit dispositif comportant un support d'acquisition (S) dont une de ses surfaces, appelé plan d'acquisition, est prévue pour qu'un document (DO) froissé soit posé dessus, une caméra numérique calibrée (C) destinée à l'acquisition de l'image (I) du document lorsqu'il est froissé, et un dispositif de projection (DP) d'une mire (M) qui comporte un motif structuré formé d'au moins un ensemble de segments de droite, la caméra (C) et le support d'acquisition (S) étant positionnés l'un par rapport à l'autre pour que la projection de la mire (M) soit faite selon un axe différent de celui de la caméra, **caractérisé en ce qu'**il comporte des moyens (O), pour mettre en oeuvre un procédé conforme à l'une des revendications 1 à 9.

**13.** Dispositif selon la revendication 12, dans lequel le dispositif de projection (DP) est positionné pour que la mire soit directement projetée sur le document (DO) lorsque celui-ci est posé sur la surface d'acquisition (S).

**14.** Dispositif selon la revendication 13, dans lequel le dispositif de projection (DP) est positionné pour que la mire (M) soit projetée à travers le document (DO).

**Patentansprüche**

**1.** Verfahren zum Erhalten eines Bildes eines entknitterten Dokuments aus einem Bild (I) dieses Dokuments, wenn es zerknittert ist (DO), wobei das Verfahren einen Schritt (100) des Bestimmens eines dreidimensionalen geome-

9

trischen Modells (M3D) der Oberfläche des zerknitterten Dokuments (DO) durch Triangulation dreidimensionaler Punkte ($u_i$), die aus dem Muster eines Bildmusters (M) definiert werden, das aus dem Bild (I) dieses Dokuments extrahiert wird, wenn es zerknittert ist, einen Schritt (200) des Bestimmens einer Projektion (M2D) des dreidimensionalen geometrischen Modells (M3D) auf einer sogenannten Erfassungsebene durch Fehlerminimierung (ERR) dieser Projektion unter den Bedingungen des Erhaltens der Abstände zwischen den dreidimensionalen Punkten (ui) des dreidimensionalen geometrischen Modells aufweist, **dadurch gekennzeichnet, dass** der Fehler (ERR) der Projektion des dreidimensionalen geometrischen Modells (M3D) auch unter den Bedingungen des Erhaltens der Winkel zwischen den verschiedenen Kanten, die diese dreidimensionalen Punkte verbinden, minimiert wird.

2. Verfahren nach Anspruch 1, wobei, nachdem das Muster mindestens einen Satz von Liniensegmenten, die parallel zueinander sind, aufweist, während des Schritts (100) des Bestimmens eines dreidimensionalen geometrischen Modells (M3D) der Oberfläche des zerknitterten Dokuments (DO) die Liniensegmente des Musters (Unterschritt 101) durch Frequenzfilterung des aufgenommenen Bildes (I) und durch Suchen der lokalen Maxima dieses gefilterten Bildes (I) aus dem Bild (I) extrahiert werden, die extrahierten Liniensegmente dann in Bezug auf Referenzliniensegmente (Unterschritt 102) indexiert werden und die dreidimensionalen Punkte ($u_i$) dann durch Triangulation der auf diese Weise indexierten Liniensegmente bestimmt werden (Unterschritt 103).

3. Verfahren nach Anspruch 1, wobei, nachdem das Muster des Bildmusters (M) einen Satz von Punkten und Liniensegmente, die die Nachbarschaftsbeziehungen zwischen diesen Punkten definieren, aufweist, die Punkte aus dem Bild (I) durch Suchen der Kugelförmigkeit in dem aufgenommenen Bild (I) extrahiert werden und die Liniensegmente durch Energieberechnung in einer Farbebene des Bildes (I) aus dem Bild (I) extrahiert werden, die extrahierten Liniensegmente dann in Bezug auf Referenzliniensegmente (Unterschritt 102) indexiert werden und die dreidimen- sionalen Punkte ($u_i$) dann durch Triangulation der Punkte und der Liniensegmente, die auf diese Weise extrahiert werden, bestimmt werden (Unterschritt 103).

4. Verfahren nach einem der Ansprüche 1 bis 3, wobei bei dem Schritt (200) des Bestimmens der Projektion (M2D) des dreidimensionalen geometrischen Modells (M3D) auf der Erfassungsebene

   - die projizierte Oberfläche des dreidimensionalen geometrischen Modells (M3D) durch Definieren eines Polygons (PO) begrenzt ist, das die Kontur der projizierten Oberfläche des entknitterten Dokuments (DO) definiert, wobei die Punkte des dreidimensionalen geometrischen Modells (M3D) unter dem Satz der dreidimensionalen Punkte als Punkte des Polygons (PO) identifiziert werden, wenn diese Punkte Kanten definieren, die nur zu einem einzigen Dreieck des dreidimensionalen geometrischen Modells (M3D) gehören, wobei die anderen Punkte des geometrischen Modells dann als sogenannte Punkte innerhalb des geschlossenen Polygons (PO) angesehen werden und durch eine gewichtete Linearkombination ihrer Nachbarn definiert werden und
   - die Längen der Kanten, die zwei aufeinander folgende dreidimensionale Punkte ($u_i$) des Polygons (PO) ver- binden, und die Winkel zwischen diesen Kanten berechnet werden.

5. Verfahren nach Anspruch 4, wobei, wenn eine Konkavität an einem Punkt des Polygons (PO) vorhanden ist, dieser Punkt als ein innerer Punkt angesehen wird, und wenn eine Konvexität an einem Punkt des Polygons ($u$) vorhanden ist, ein virtueller Punkt ($u_{N+1}$) zu dem Polygon hinzugefügt wird und der Punkt des Polygons ($u$) dann als ein innerer Punkt angesehen wird.

6. Verfahren nach Anspruch 5, wobei ein virtueller Punkt ($u_{N+1}$) durch den Symmetriemittelpunkt am Punkt des Polygons ($u_{N+1}$) definiert wird, der von einer Geraden getragen wird, die den Punkt des Polygons ($u$) mit der Mitte der Kante verbindet, die zwei benachbarte Punkte ($u_{i-l}$, $u_{1+1}$) des Punktes ($u$) des Polygons verbindet.

7. Verfahren nach Anspruch 5 oder 6, wobei jeder dreidimensionale Punkt, der als ein innerer Punkt angesehen wird, durch den Schwerpunkt seiner benachbarten Punkte ersetzt wird.

8. Verfahren nach einem der Ansprüche, wobei dem Schritt (200) des Bestimmens einer Projektion (M2D) des dreidimensionalen geometrischen Modells (M3D) ein Schritt (400) des Reduzierens der Komplexität des dreidimensionalen geometrischen Modells (M3D) vorausgeht, bei dem, wenn die Topologie um einen dreidimensionalen Punkt ($u_i$) des geometrischen Modells (M3D) nicht eben ist, die Topologie dieses Punktes unverändert bleibt, und im gegenteiligen Fall der Punkt aus dem dreidimensionalen Modell gelöscht wird und die benachbarten Punkte dieses Punktes dann wieder trianguliert werden.

9. Verfahren nach einem der vorhergehenden Ansprüche, das einen Schritt (500) des Approximierens der Oberfläche

# EP 2 494 517 B1

des zerknitterten Dokuments (DO) durch einen Satz von Wavelets im dem Raum aufweist, dann ein dreidimensionales geometrisches Modell mit mehrfacher Auflösung erhalten wird und die Schritte des Verfahrens nach einem der Ansprüche 1 bis 9 dann durchgeführt werden, um ein dreidimensionales geometrisches Modell mit mindestens einer der Auflösungen, die durch diesen Satz von Wavelets definiert werden, zu bestimmen.

10. Muster eines Bildmusters (M), das dazu bestimmt ist, auf ein zerknittertes Dokument projiziert werden soll, dessen Bild (I) von einer Kamera aufgenommen wird, und das aus mindestens einem Satz von Liniensegmenten gebildet ist, die parallel zueinander sind, **dadurch gekennzeichnet, dass** das Bildmuster auch aus Punkten gebildet ist, wobei die Liniensegmente dann die Nachbarschaftsbeziehungen zwischen diesen Punkten definieren.

11. Muster eines Bildmusters nach Anspruch 10, wobei das Muster aus einem Wechsel von Einzel- und Doppelliniensegmenten gebildet ist und/oder die Dicken dieser Liniensegmente unterschiedlich sind und/oder die Abstände zwischen ihnen variabel sind.

12. Vorrichtung zum Erhalten eines Bildes eines entknitterten Dokuments aus einem Bild (I) dieses Dokuments, wenn es zerknittert ist (DO), wobei die Vorrichtung einen Erfassungsträger (S), von dem eine seiner Oberflächen, die Erfassungsebene genannt wird, dafür vorgesehen ist, dass ein zerknittertes Dokument (DO) darauf gelegt wird, eine kalibrierte Digitalkamera (C), die zum Aufnehmen des Bildes (I) des Dokuments bestimmt ist, wenn es zerknittert ist, und eine Projektionsvorrichtung (DP) eines Bildmusters (M) aufweist, das ein strukturiertes Muster aufweist, das aus mindestens einem Satz von Liniensegmenten gebildet ist, wobei die Kamera (C) und der Erfassungsträger (S) relativ zueinander angeordnet sind, damit das Projizieren des Bildmusters (M) entlang einer anderen Achse als jener der Kamera erfolgt, **dadurch gekennzeichnet dass** sie Mittel (O) aufweist, um ein Verfahren nach einem der Ansprüche 1 bis 9 umzusetzen.

13. Vorrichtung nach Anspruch 12, wobei die Projektionsvorrichtung (DP) angeordnet ist, damit das Bildmuster direkt auf das Dokument (DO) projiziert wird, wenn dieses auf die Erfassungsebene (S) gelegt wird.

14. Vorrichtung nach Anspruch 13, wobei die Projektionsvorrichtung (DP) angeordnet ist, damit das Bildmuster (M) durch das Dokument (DO) projiziert wird.

## Claims

1. Method for obtaining an image of an un-crumpled document from an image (I) of this document when it is crumpled (DO), the said method comprising a step (100) of determination of a three-dimensional geometric model (M3D) of the surface of the crumpled document (DO) by triangulation of three-dimensional points ($u_i$) defined from the pattern of an optical test object (M) extracted from the image (I) of this document when it is crumpled, a step (200) of determination of a projection (M2D) of the three-dimensional geometric model (M3D) on a so-called acquisition plane, by minimisation of error (ERR) of this projection under constraints of conservation of the distances between the three-dimensional points (ui) of the three-dimensional geometric model, **characterised in that** the error (ERR) of projection of the three-dimensional geometric model (M3D) is also minimised under constraints of conservation of the angles between the different edges which connect these three-dimensional points.

2. Method according to claim 1, wherein, with the pattern comprising at least one set of segments of straight line parallel to one another, during the step (100) of determination of a three-dimensional geometric model (M3D) of the surface of the crumpled document (DO), the segments of straight line of the pattern (sub-step 101) are extracted from the image (I) by frequency filtering of the image acquired (I) and search for the local maximums of this filtered image (I), the segments of straight line extracted are then indexed relative to reference segments of straight line (sub-step 102), and the three-dimensional points ($u_i$) are then determined (sub-step 103) by triangulation of the segments of straight line thus indexed.

3. Method according to claim 1, wherein, with the pattern of the optical test object (M) comprising a set of points and segments of straight line which define the relationships of vicinity between these points, the points are extracted from the image (I) by searching for sphericity in the image (I) acquired, and the segments of straight line are extracted from the image (I) by calculation of energy on a colour plane of the image (I), the segments of straight line extracted are then indexed relative to reference segments of straight line (sub-step 102), and the three-dimensional points ($u_i$) are then determined (sub-step 103) by triangulation of the points and of the segments of straight line thus extracted.

11

4. Method according to one of claims 1 to 3, wherein, during the step (200) of determination of the projection (M2D) of the three-dimensional geometric model (M3D) on the acquisition plane:

- the projected surface of the three-dimensional geometric model (M3D) is delimited by definition of a polygon (PO) which defines the contour of the projected surface of the crumpled document (DO), with the points of the three-dimensional geometric model (M3D) being defined from amongst the set of three-dimensional points as being points of the polygon (PO), when these points define edges which belong to only a single triangle of the three-dimensional geometric model (M3D), the other points of the geometric model then being considered as being so-called inner points of the closed polygon (PO), and defined by a weighted linear combination of their adjacent points; and
- there is calculation of the lengths of the edges which connect two consecutive three-dimensional points ($u_i$) of the polygon (PO) as well as the angles between these edges.

5. Method according to claim 4, wherein, when a concavity is present at a point of the polygon (PO), this point is considered to be an inner point, and when a convexity is present at a point of the polygon ($u$), a virtual point ($u_{N+1}$) is added to the polygon, and the point of the polygon ($u$) is then considered to be an inner point.

6. Method according to claim 5, wherein a virtual point ($u_{N+1}$) is defined by the central point of symmetry at the point ($u_{N+1}$) of the polygon which is borne by a straight line connecting the point of the polygon *(u)* to the middle of the edge which connects to adjacent points ($u_{i-1}$, $u_{i+1}$) of the point *(u)* of the polygon.

7. Method according to claim 5 or 6, wherein each three-dimensional point which is considered to be an inner point is replaced by the barycentre of its adjacent points.

8. Method according to one of the claims, wherein the step (200) of determination of a projection (M2D) of the three-dimensional geometric model (M3D) is preceded by a step (400) of reduction of the complexity of the three-dimensional geometric model (M3D) during which, if the topology around a three-dimensional point ($u_i$) of the geometric model (M3D) is not flat, the topology of this point remains unchanged, and, otherwise, the point is eliminated from the three-dimensional model, and the points adjacent to this point are then triangulated once more.

9. Method according to one of the preceding claims, which comprises a step (500) of approximation of the surface of the crumpled document (DO) by a set of wavelets in space, a multi-resolution three-dimensional geometric model is then obtained, and the steps of the method according to one of claims 1 to 9 are then executed, in order to determine a three-dimensional geometric model with at least one of the resolutions defined by this set of wavelets.

10. Pattern of an optical test object (M) which is designed to be projected on a crumpled document, an image (I) of which is acquired by a camera, and which pattern is formed by at least one set of segments of straight line parallel to one another, **characterised in that** the pattern is also formed by points, with the said segments of straight line then defining the relationships of vicinity between these points.

11. Pattern of an optical test object according to claim 10, wherein the pattern is formed by an alternation of segments of single and double straight lines, and/or the thicknesses of these segments of straight lines are different, and/or the distances which separate them are variable.

12. Device for obtaining an image of an un-crumpled document from an image (I) of this document when it is crumpled (DO), the said device comprising an acquisition support (S), one of the surfaces of which, known as the acquisition plane, is designed for a crumpled document (DO) to be placed on it, a calibrated digital camera (C), which is designed for acquisition of the image (I) of the document when it is crumpled, and a device (DP) for projection of an optical test object (M) which comprises a structured pattern formed by at least one set of segments of straight line, with the camera (C) and the acquisition support (S) being positioned relative to one another such that the projection of the optical test object (M) is carried out according to an axis different from that of the camera, **characterised in that** it comprises means (O) for implementation of the method according to one of claims 1 to 9.

13. Device according to claim 12, wherein the projection device (DP) is positioned such that the optical test object is projected directly onto the document (DO) when the document is placed on the acquisition surface (S).

14. Device according to claim 13, wherein the projection device (DP) is positioned such that the optical test object (M) is projected through the document (DO).

**Fig. 1**

I

500

101

102

100

103

ui

104

M3D

400

200

M2D

300

**Fig. 2**

**Fig. 3**

**Fig. 4**

1 ——————————————

2 ——————————————

3 ——————————————

5 ——————————————

6 ——————————————

7 ——————————————

$z1$

$z2$

$z3$

$z4$

$z5$

$z6$

**Fig. 5**

**Fig. 6**

**Fig. 7**

**Fig. 8**

**Fig. 9**

**Fig. 10**

**Fig. 11**

**Fig. 12**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BROWN et al.** *Image Restoration of Arbitrary Warped Documents,* 2004

- **DESBRUN et al.** *Intrinsic Parametrization of Surface Meshes,* 2002